# EUROPEAN PATENT SPECIFICATION

(11) **EP 4 144 636 B1**
(45) Date of publication and mention of the grant of the patent: **06.11.2024**
(21) Application number: 21382791.8
(22) Date of filing: 01.09.2021
(51) Int. Cl.: B64C 9/08, B64C 9/02, B64C 9/16, B64C 9/22

(54) **AIRCRAFT LIFTING SURFACE**
FLUGZEUGAUFTRIEBSFLÄCHE
SURFACE DE SUSTENTATION D'AÉRONEF

(43) Date of publication of application: 08.03.2023
(73) Proprietor: Airbus Operations, S.L.U., 28906 Getafe (Madrid) (ES)
(72) Inventor: MARTINO GONZALEZ, Esteban, 28906 Madrid (ES); NOGUEROLES VIÑES, Pedro, 28906 Madrid (ES); RUPEREZ, Javier, 28906 Madrid (ES)
(74) Representative: Elzaburu S.L.P.

(56) References cited:
- WO-A1-2012/114047
- DE-A1- 102011 082 888
- US-A- 2 405 726
- US-A- 2 579 534
- US-A- 2 791 385
- US-A- 4 614 320

## Description

### FIELD OF THE INVENTION

The present invention relates to an aircraft lifting surface comprising an actuation system of a movable part with respect to a stationary part.

### BACKGROUND OF THE INVENTION

Aircraft lifting surfaces have a span direction and a chord direction. They comprise a stationary part and they may comprise one or more movable parts.

The stationary part is stationary with respect to the rest of the aircraft, for instance, with respect to the fuselage. The stationary part may be a central or torsion box.

The movable part is movable with respect to the stationary part of the lifting surface. The movable part may be one or more control surfaces.

Movable parts are movable with respect to stationary parts between at least a first position and a second position. Movable parts may have a rotation movement around an axis or they may have a translation and rotation movement.

For aircraft lifting surfaces, empennage lifting surfaces and wing surfaces are known.

Empennage lifting surfaces comprise control surfaces that are rigid structures that are movable with respect to a central torsion box of the lifting surface. Specifically, the movement of the control surfaces comprises a rotation of the control surface around a hinge axis in the span direction.

Control surfaces are moved by hydraulic, electric or hybrid actuators located in the aircraft lifting surface. The actuator may produce a displacement of the control surface such that the lifting surface extends to increase the lifting area. In another embodiment, the control surface may rotate around a hinge axis. This rotation produces a change in angle of the control surface resulting in an increase of camber of the aircraft lifting surface profile. This increase of camber produces the desired lift increase.

The actuation system and the hinges are located rearward of a rear spar of the torsion box which is normally located around at 50% of the chord. Around 25% of the chord of the profile is required for the installation of the actuator and hinge, so only the remaining 25% of the chord is available for the control surface itself.

The space between the rear spar and the control surface, where the actuator and the hinge are located, is covered by a rigid aerodynamic fairing. These rigid fairings cannot deform, so they are not able to contribute to increase the camber of the profile, and, as a consequence, to increase the lift of the lifting surface.

The control surfaces of a wing lifting surface are more complex than empennage ones. In this case the structure of the wing is the main body producing lift. The control surfaces produce both an increase of camber and an increase of chord on the aircraft lifting surface profile so that an increased lift performance is achieved.

Control surfaces may be located at the leading edge and/or at the trailing edge of the aircraft lifting surface.

According to the above, the most efficient lifting surface is achieved when the control surfaces are located at the same time on the trailing edge and on the leading edge and producing a change of camber and an increase of chord.

It is also known to locate the rotation axis outside the aircraft lifting surface to achieve the desired combination of translation and rotation. By rotating around the mentioned axis, the control surface achieves at the same time an increase of incidence angle and a translation in the chord direction. When the rotation axis is located outside the aerodynamic profile of aircraft lifting surface it requires one or multiple actuators and a heavy support structure for these actuators. For this reason, it needs to be covered by additional fairings. For instance, for several conventional flaps located in wings, multiple support structures and fairings are located along the span of the wing. As previously stated, said fairings are located outside the aerodynamic profile of the lifting surface resulting in a significant weight increase and drag penalty.

The prior art is illustrated by document DE102011082888 disclosing a lift flap bearing apparatus, a lift flap assembly, an airfoil and an aircraft.

Prior art document WO2012114047A1 proposes an aircraft with reduced environmental impact. It discloses an acoustic masking device comprising a masking element, such as a flap, which can move between a position in which it is retracted into the wing, and a position in which it is extended toward the rear of the wing.

Further prior art documents are US2405726, US2579534, US2791385 and US4614320 that disclose known flap mechanisms.

### SUMMARY OF THE INVENTION

The proposed invention consists of an aircraft lifting surface comprising at least one actuation system that allows the movement of the movable part with respect to the stationary part of the lifting surface with a simple system and easy to adapt to current aircraft lifting surfaces.

An aircraft lifting surface object of the invention comprises:
- A stationary part.
- A movable part, movable with respect to the stationary part. The movable part comprises an end in the span direction.
- A portion of a fuselage of an aircraft.
- An actuation system configured to actuate the movable part with respect to the stationary part.

The end of the movable part is the portion where the movable part begins and is located in a position adjacent to the root of the lifting surface, i.e., adjacent to the fuselage of the aircraft. A second end of the movable part may be located at the tip of the lifting surface or, in an alternative, at an intermediate position along the span of the aircraft lifting surface. Intermediate position is understood as located in a span position between the root and the tip of the lifting surface.

The actuation system of the aircraft lifting surface of the invention comprises a sliding system causing the movable part to slide with respect to the stationary structure. The sliding system is joined to:
- the end of the movable part in the span direction, and
- configured to be joined to a stationary structure of the aircraft located adjacent in the span direction to the end and connected with the stationary part of the lifting surface. By connected is meant, two elements that are joined or linked to each other.

The stationary structure is located adjacent to the end of the movable part, for instance, adjacent to a control surface. The stationary structure may be located in a plane perpendicular to the span direction of the movable part. The stationary structure is also located adjacent or, what is the same, nearby and immediately following the movable part in the span direction.

The sliding system may be of the kind that comprises a guide track and a complementary element. The guide track and the complementary element are configured to move relative to each other. The complementary element may be movable along the guide track or, alternatively, the guide track may be movable with respect to a static complementary element. The complementary element may be a bearing wheel, a pin, etc,
The sliding system is joined to the end of the movable part on one side and to the stationary structure on the other side. It means that the sliding system may be located between the end of the movable part and the stationary structure or in an alternative, the guide track and/or the complementary element may be located in a recess at the end of the movable part and/or at the stationary structure. In another alternative, the shape of the end of the movable part may act as a guide track.

According to the above, the movable part and the stationary structure are in movable coupling by the sliding system.

Therefore, the movable part, the stationary structure and the sliding system are configured so that the relative movement of the complementary element and the guide track forces the movable part to follow the guide track so that the movable part is moved with respect to the stationary structure between at least a first position and a second position.

Attending to the shape of the guide track of the sliding system, the actuation system may generate a rotation and/or translation in the movable part. If both movements are achieved, it results in an increase of camber and an increase of the chord of the profile with minimum intermediate supports.

The movable part is forced to follow the track shape between at least a first and a second position, for instance, a forward and a rear position separated by a longitudinal distance. On those positions the reaction of the track produces a force normal to the track. In each instant of the movement of the movable part, the projection of the normal reaction to the track, in a plane close to the perpendicular to the span of the lifting surface, can be either parallel, so that the resultant displacement will be a pure translation, or they can intersect at a point, so that the resultant displacement of the movable will be a rotation about those intersections.

The lifting surface objects of the invention provide the following advantages:
- It does not require intermediate heavy supports and actuation systems distributed along the span of the lifting surface, as those previously mentioned in the state of the art.
- It does not require fairings located outside of the aircraft lifting surface aerodynamic profile to cover the support structures of the actuation system.
- The complexity of the actuation system is limited compared to the known mechanisms.
- It is able to produce an increase of chord and an increase of camber at the same time.

Therefore, the actuation system object of the invention provides additional structure efficiency and reduces aerodynamic drag.

It has to be noted that in this application by aircraft lifting surface it is understood a wing, a vertical tail plane or a horizontal tail plane, or any other aerodynamic surface that may provide significant lift or maneuverability to the aircraft.

### DESCRIPTION OF THE FIGURES

To complete the description and to provide for a better understanding of the invention, a set of drawings is provided. Said drawings form an integral part of the description and illustrate preferred embodiments of the invention. The drawings comprise the following figures.
Figure 1 shows a perspective view of an embodiment of an aircraft showing different aircraft lifting surfaces and their control surfaces.
Figure 2 shows a schematic perspective view of an embodiment of a portion of a root of an aircraft lifting surface and of a stationary structure.
Figure 3 shows a schematic perspective view of an embodiment of the sliding system.
Figure 4 shows a plan schematic representation of an embodiment of the shape of a guide track and the movement that a portion of the movable part performs along the guide track.
Figure 5 shows a plan schematic representation of another embodiment of the shape of a guide track and the movement that a portion of the movable part performs along the guide track.
Figure 6 shows a plan schematic representation of an embodiment of the shape of a guide track and an actuator and the movement that a portion of the movable part performs along the guide track.
Figure 7 shows a schematic perspective view of an embodiment of a portion of a tip of an aircraft lifting surface and of a stationary structure.

### DETAILED DESCRIPTION OF THE INVENTION

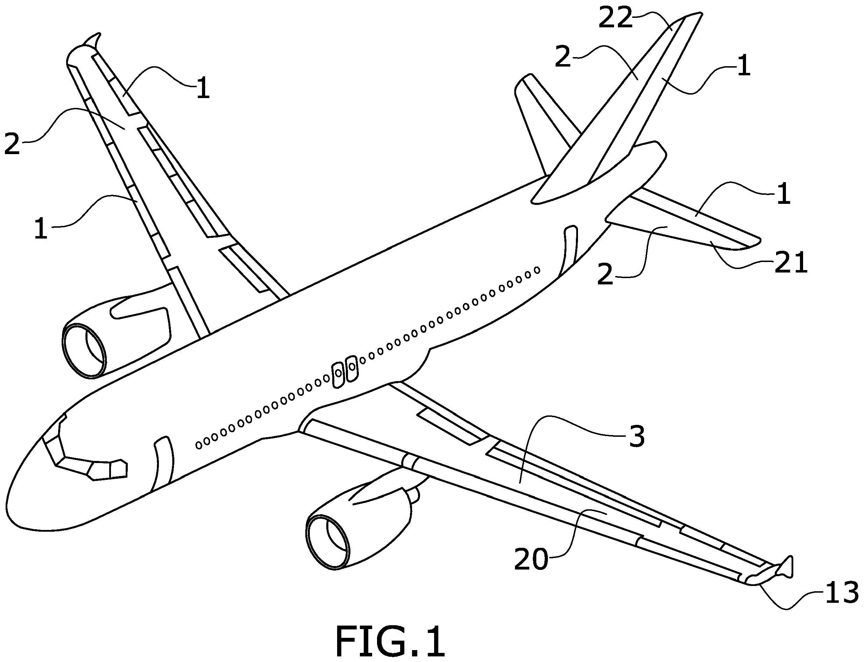

Figure 1 shows a perspective view an embodiment of an aircraft showing the different aircraft lifting surfaces (2) and their control surfaces or movable parts (1). The invention can be applied, for instance in a wing (20), a vertical tail plane (22) or a horizontal tail plane (21).

The shown lifting surfaces (2) have a span direction and a chord direction and comprise a central box as stationary parts (3) and control surfaces as movable parts (1). The movable parts (1) can be located at the leading edge, trailing edge or at both. The movable parts may be ailerons, elevators, rudders, spoilers, flaps or slats, among others.

Movable parts (1) are movable with respect to the central box of the aircraft lifting surface (2). Movable parts (1) can be moved towards different positions, at least between a first position and a second position.

Movable parts (1) comprise at least an end (4) in the span direction. Depending on the length and position of the movable part (1), the end (4) of the movable part (1) may be located at the root of the lifting surface (2), at the tip of the lifting surface (2) or at an intermediate position along the span direction of the lifting surface (2) located between the root and the tip of the lifting surface (2).

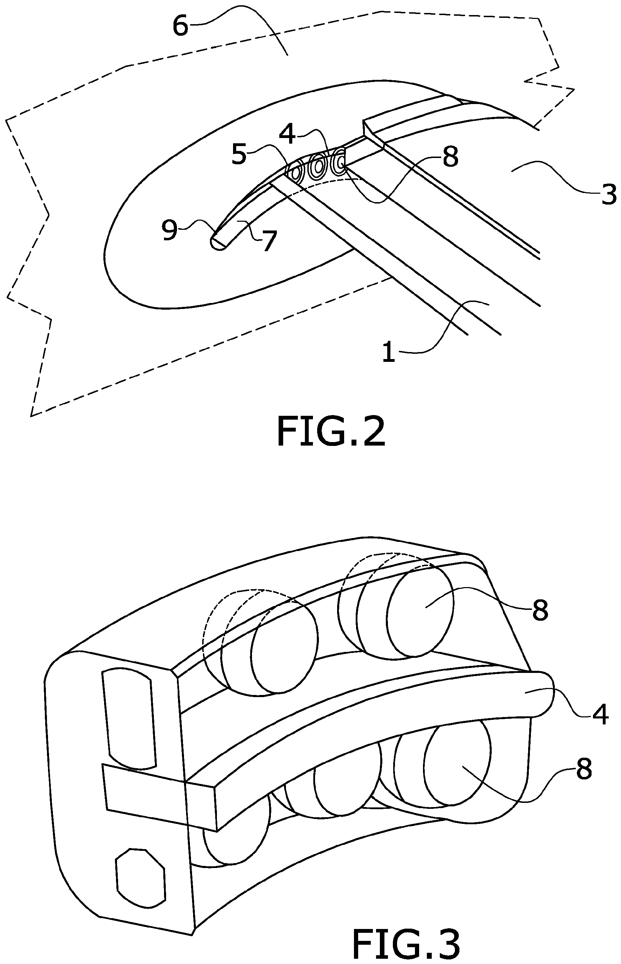

Figure 2 discloses an embodiment of the actuation system. The depicted system comprises:
- A portion of the movable part (1), the portion comprising an end (4).
- A portion of the stationary structure adjacent to the end (4) of the movable part (1), the stationary structure being a portion (6) of the fuselage of the aircraft. The stationary structure (6) is located in a plane perpendicular to the span direction of the movable part (1). The stationary structure (6) is joined to the stationary part (3).
- A sliding system comprising a guide track (7) and a complementary element (5) configured to move relative to each other. In the shown embodiment the guide track (7) is joined to the stationary structure (6) and the complementary element (5) is joined to the movable part (1).

In this way, the movement of the complementary element (5) along the guide track (7) forces the movable part (1) to follow the guide track (7) so that the movable part (1) is moved with respect to the stationary structure (6) between at least a first position and a second position.

More particularly, the stationary structure (6) comprises a slot (9) housing the guide track (7). The end (4) of the movable part (1) comprises the complementary element (5) such that the complementary element (5) is configured to fit in the slot (9) to follow the guide track (7).

In this embodiment, the complementary element (5) comprises at least one rolling element (8) adapted to roll in the guide track (7). The complementary element (5) also comprises a shaft joined to the movable part (1). The rolling element (8) is adapted to rotate around the shaft.

More particularly, the end (4) of the movable part (1) comprises a set of shafts and rolling elements (8) that may contact the guide track (7). The guide track (7) is structurally attached to the stationary structure (6) of the aircraft and has the required curved shape to force the rolling element (8) to follow a predetermined path.

Alternatively, the guide track (7) may be located at the end (4) of the movable part (1) and the complementary element (5) may be located in the stationary structure (6).

The above embodiment is disclosed in figure 3. In this embodiment, the stationary structure (6) comprises at least a first and a second complementary element (5). In the shown embodiment, the stationary structure (6) comprises several rolling elements (8). The end (4) of the movable part (1) forms the guide track (7) by, for instance, a curved shape of the movable part (1). The end (4) of the movable part (1) is configured to be located between the first and the second complementary elements (5) so that the end (4) of the movable part (1) is adapted to move relative to the first and the second complementary elements (5) in a curved manner.

In the embodiment, the complementary element (5) comprises a set of rolling elements (8) such that the end (4) of the control surface or movable part (1) rolls between them. More specifically, the end (4) of the movable part (1) is located between a first row and a second row of complementary rolling elements (8).

In the above embodiment, the end (4) of the movable part (1) is a male guide track (7), contrary to the embodiment disclosed in figure 2 in which the guide track (7) located in the stationary structure (6) acts as a female guide track (7).

The guide track (7) may comprise a rectilinear portion, a linear portion or both.

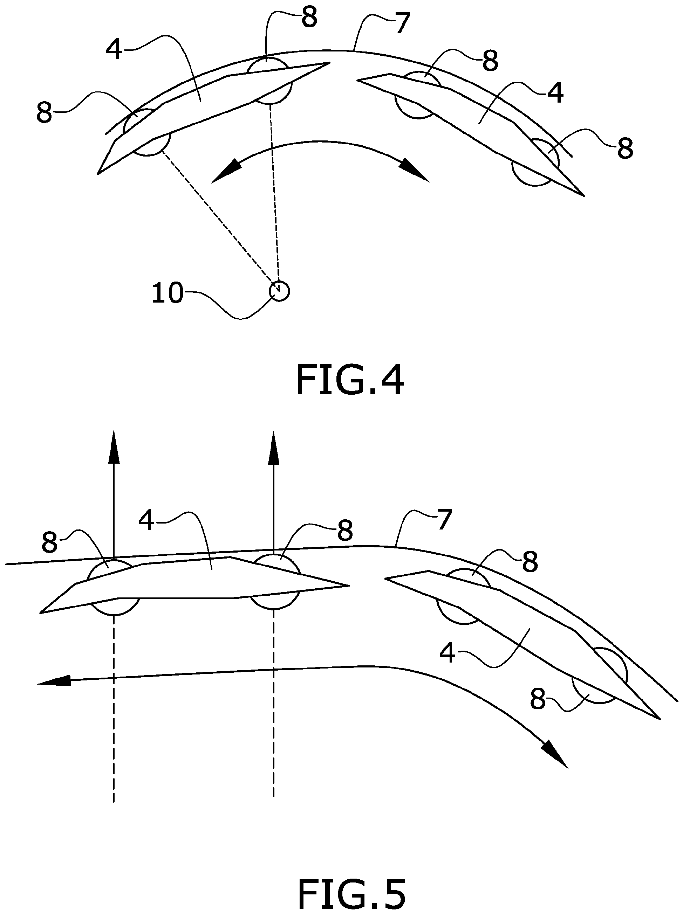

A rectilinear portion would impart the movable part (1) with a translation in the chord direction with respect to the stationary part (3). It is partly shown in the left side of figure 5.

Figure 4 and the right side of figure 5 show a curved portion such that the movement of the movable part (1) with respect to the stationary part (3) is a rotation around an axis (10) located in the span direction.

In the embodiments shown in figures 4 and 5, the complementary element (5) comprises a rolling element (8) and a shaft.

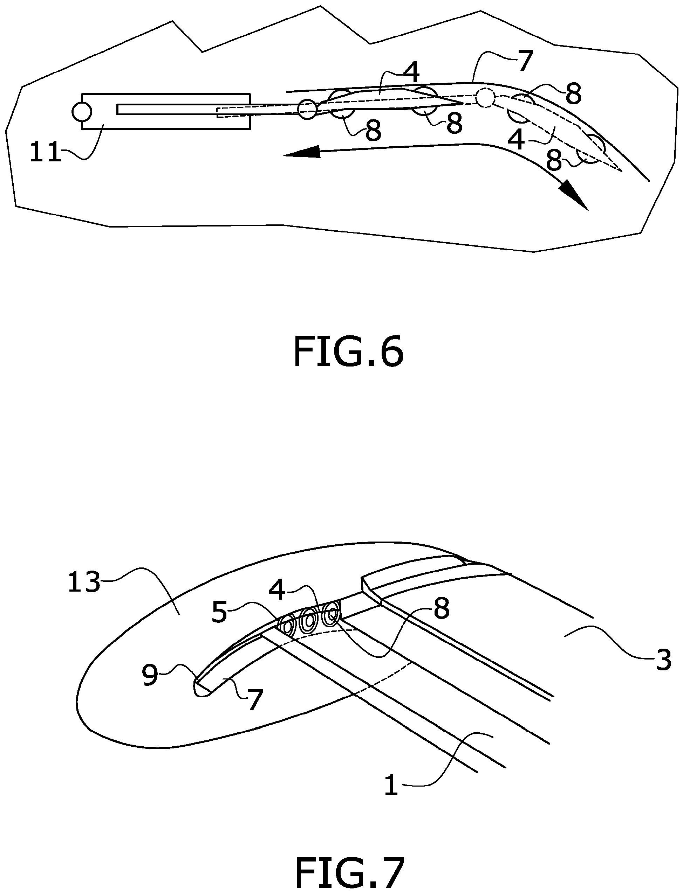

Figure 6 discloses an actuator (11) in connection with the movable part (1) and the stationary part (3) to impart a force to the movable part (1) for its movement between a first position and a second position with relation to the stationary part (3).

The actuator (11) is located in the portion (6) of the fuselage.

The advantage of allocating the actuator (11) in the fuselage is that it does not require space inside the aerodynamic profile of the lifting surface (2) reducing the available space for, for instance, the torsion box.

In a configuration that is not covered by the claims, the actuator (11) may be located in the movable part (1).

The shown actuator (11) is a linear actuator having a longitudinal axis. The longitudinal axis is approximately tangent to the curve described by the guide track (7). The extension and retraction of the actuator (11) produces a displacement of the end (4) of the movable part (1) along the guide track (7).

This would make the efforts to move the movable part (1) as minimal as possible.

In an embodiment, the portion of the movable part (1) fitting the fuselage through a slot (9) comprises attaching means, for instance, lugs, axis and bearings, to which the actuator (11) is attached.

An actuation system may also be applied to an end (4) of a movable part (1) located at the tip of the lifting surface (2) and/or at an intermediate position of the lifting surface (2).

According to the invention, the stationary structure is a portion (6) of the fuselage of the aircraft and the end (4) of the movable part (1) is located in a root of the aircraft lifting surface (2) in the span direction.

An end (4) of the movable part (1) may be located at the tip of the aircraft lifting surface (2) in the span direction with a stationary structure being a fairing adjacent to the end (4) of the movable part (1) at the tip of the lifting surface (2) and connected to the stationary part (3). The wing tip fairing may for example be a wing tip plate or a wing tip fence.

As in the embodiment shown in figure 7, at the tip of the lifting surface (2) the movable part (1) comprises an end (4) that fits in a slot (9) of the wing tip fairing (13), said fairing forming a stationary structure of the lifting surface (2).

Another option is that an end (4) of the movable part (1) is located at an intermediate position along the span of the lifting surface (2). A stationary structure may comprise a fairing in the vicinity of the end (4) of the movable part (1) at said intermediate position along the lifting surface. The movable part (1) may be joined to such intermediate stationary part (3).

In an embodiment, actuation systems may be applied to two ends (4) in the span direction of the movable part (1). The movable part (1) would comprise a second end in the span direction and the sliding system would comprise a second sliding system joined to the second end of the movable part and configured to be joined to a stationary structure of the aircraft.

Said second end (4) may be located at the tip of the lifting surface (2) and/or at an intermediate position of the lifting surface (2).

The shape of the guide track (7) located, for instance, at the tip and at the root of the lifting surface (2), may have the appropriate shape so that the movement of the entire movable part (1) is compatible with both guide tracks (7), so that the moving part (1) can follow the required movement imposed by both guide tracks (7), at each of its two ends (4).

## Claims

1. Aircraft lifting surface (2) having a span direction, the lifting surface (2) comprising:
- a stationary part (3),
- a movable part (1), movable with respect to the stationary part (3) and comprising an end (4) in the span direction,
- a portion (6) of a fuselage of an aircraft,
- an actuation system configured to actuate the movable part (1) with respect to the stationary part (3),
the actuation system comprising a sliding system joined to:
- the end (4) of the movable part (1), and
- joined to a stationary structure of the aircraft, said stationary structure being:
• located adjacent in the span direction to the end (4) of the movable part (1), and
• connected with the stationary part (3) of the lifting surface,
so that the sliding system allows the movable part (1) to slide with respect to the stationary structure, the stationary structure being the portion (6) of the fuselage of the aircraft and the end (4) of the movable part (1) being located at a root of the aircraft lifting surface (2) in the span direction, **characterized by** an actuator (11) located in the portion (6) of the fuselage and in connection with the movable part (1), the actuator (11) being configured to impart a force to the movable part (1) for its movement between at least a first position and a second position.

2. Aircraft lifting surface (2), according to claim 1, wherein the sliding system comprises a guide track (7) and a complementary element (5) configured to slide with respect to each other.

3. Aircraft lifting surface (2), according to claim 2, wherein:
- the guide track (7) is located in the stationary structure and the complementary element (5) is located in the end (4) of the movable part (1), or
- the guide track (7) is located in the end (4) of the movable part (1) and the complementary element (5) is located in the stationary structure.

4. Aircraft lifting surface (2), according to any claims 2 or 3, wherein the stationary structure comprises a slot (9) housing the guide track (7) and the end (4) of the movable part (1) comprises the complementary element (5) such that the complementary element (5) is configured to fit in the slot (9) to follow the guide track (7).

5. Aircraft lifting surface (2), according to any preceding claim 2 to 4, wherein the stationary structure comprises at least a first and a second complementary element (5) and the end (4) of the movable part (1) constitutes the guide track (7) such that the end (4) of the movable part (1) is configured to be located between the first and the second complementary elements (5) so that the end (4) is adapted to move relative to the first and the second complementary elements (5).

6. Aircraft lifting surface (2), according to any preceding claim 2 to 5, wherein the complementary element (5) comprises a rolling element (8) adapted to roll in the guide track (7).

7. Aircraft lifting surface (2), according to claim 1, wherein the actuator (11) is a linear actuator having a longitudinal axis, said longitudinal axis being approximately tangent to a curve described by the guide track (7).

8. Aircraft lifting surface (2), according to any preceding claim, wherein the movable part (1) comprises a second end in the span direction and the sliding system comprises a second sliding system joined to the second end of the movable part and configured to be joined to another stationary structure of the aircraft.

9. Aircraft lifting surface (2), according to claim 8, wherein the second end of the movable part (1) is located at a tip of the aircraft lifting surface (2) in the span direction and the other stationary structure is a fairing adjacent to the tip of the lifting surface (2).

10. Aircraft lifting surface (2), according to claim 8, wherein the second end of the movable part (1) is located at an intermediate position along the span of the lifting surface (2) and the other stationary structure is a fairing adjacent to said intermediate position.

11. Aircraft, comprising a lifting surface (2) according to any preceding claim.

## Patentansprüche

1. Flugzeugauftriebsfläche (2) mit einer Spannweitenrichtung, wobei die Auftriebsfläche (2) umfasst:
- einen feststehenden Teil (3),
- einen bewegbaren Teil (1), der in Bezug auf den feststehenden Teil (3) bewegbar ist und ein Ende (4) in Spannweitenrichtung umfasst,
- einen Abschnitt (6) des Rumpfes eines Flugzeugs,
- ein Betätigungssystem, das dazu ausgelegt ist, den bewegbaren Teil (1) in Bezug auf den feststehenden Teil (3) zu betätigen,
wobei das Betätigungssystem ein Gleitsystem umfasst, das verbunden ist mit:
- dem Ende (4) des bewegbaren Teils (1), und
- einer feststehenden Struktur des Flugzeugs, wobei die feststehende Struktur:
• sich in Spannweitenrichtung angrenzend an das Ende (4) des bewegbaren Teils (1) befindet, und
• mit dem feststehenden Teil (3) der Auftriebsfläche verbunden ist, sodass das Gleitsystem das Gleiten des bewegbaren Teils (1) in Bezug auf die feststehende Struktur ermöglicht, wobei die feststehende Struktur der Abschnitt (6) des Flugzeugrumpfes ist und sich das Ende (4) des bewegbaren Teils (1) an einer Wurzel der Flugzeugauftriebsfläche (2) in Spannweitenrichtung befindet,
**gekennzeichnet durch** einen Aktuator (11), der sich in dem Abschnitt (6) des Rumpfes befindet und mit dem bewegbaren Teil (1) in Verbindung steht, wobei der Aktuator (11) dazu ausgelegt ist, eine Kraft auf den bewegbaren Teil (1) für dessen Bewegung zwischen mindestens einer ersten Stellung und einer zweiten Stellung auszuüben.

2. Flugzeugauftriebsfläche (2) nach Anspruch 1, wobei das Gleitsystem eine Führungsschiene (7) und ein komplementäres Element (5) umfasst, die dazu ausgelegt sind, in Bezug zueinander zu gleiten.

3. Flugzeugauftriebsfläche (2) nach Anspruch 2, wobei:
- die Führungsschiene (7) sich in der feststehenden Struktur befindet und das Komplementärelement (5) sich im Ende (4) des bewegbaren Teils (1) befindet, oder
- die Führungsschiene (7) sich am Ende (4) des bewegbaren Teils (1) befindet und das Komplementärelement (5) sich in der feststehenden Struktur befindet.

4. Flugzeugauftriebsfläche (2) nach einem der Ansprüche 2 oder 3, wobei die feststehende Struktur einen Schlitz (9) umfasst, der die Führungsbahn (7) aufnimmt, und das Ende (4) des bewegbaren Teils (1) das komplementäre Element (5) so umfasst, dass das komplementäre Element (5) dazu ausgelegt ist, in den Schlitz (9) zu passen, um der Führungsbahn (7) zu folgen.

5. Flugzeugauftriebsfläche (2) nach einem der vorhergehenden Ansprüche 2 bis 4, wobei die feststehende Struktur mindestens ein erstes und ein zweites komplementäres Element (5) umfasst und das Ende (4) des bewegbaren Teils (1) so die Führungsbahn (7) bildet, dass das Ende (4) des bewegbaren Teils (1) dazu ausgelegt ist, zwischen dem ersten und dem zweiten komplementären Element (5) angeordnet zu sein, sodass das Ende (4) dazu ausgelegt ist, sich relativ zu dem ersten und dem zweiten komplementären Element (5) zu bewegen.

6. Flugzeugauftriebsfläche (2) nach einem der vorhergehenden Ansprüche 2 bis 5, wobei das komplementäre Element (5) ein Rollelement (8) umfasst, das dazu eingerichtet ist, in der Führungsbahn (7) zu rollen.

7. Flugzeugauftriebsfläche (2) nach Anspruch 1, wobei der Aktuator (11) ein Linearaktuator mit einer Längsachse ist, wobei die Längsachse annähernd tangential zu einer durch die Führungsbahn (7) beschriebenen Kurve verläuft.

8. Flugzeugauftriebsfläche (2) nach einem der vorhergehenden Ansprüche, wobei der bewegbare Teil (1) ein zweites Ende in Spannweitenrichtung umfasst und das Gleitsystem ein zweites Gleitsystem umfasst, das mit dem zweiten Ende des bewegbaren Teils verbunden und dazu ausgelegt ist, mit einer anderen feststehenden Struktur des Flugzeugs verbunden zu werden.

9. Flugzeugauftriebsfläche (2) nach Anspruch 8, wobei sich das zweite Ende des bewegbaren Teils (1) an einer Spitze der Flugzeugauftriebsfläche (2) in Spannweitenrichtung befindet und die andere feststehende Struktur eine an die Spitze der Auftriebsfläche (2) angrenzende Verkleidung ist.

10. Flugzeugauftriebsfläche (2) nach Anspruch 8, wobei sich das zweite Ende des bewegbaren Teils (1) an einer Zwischenposition entlang der Spannweite der Auftriebsfläche (2) befindet und die andere feststehende Struktur eine an diese Zwischenposition angrenzende Verkleidung ist.

11. Flugzeug, umfassend eine Auftriebsfläche (2) nach einem der vorhergehenden Ansprüche.

## Revendications

1. Surface portante d'aéronef (2) ayant une direction d'envergure, la surface portante (2) comprenant :
- une partie stationnaire (3),
- une partie mobile (1), mobile par rapport à la partie stationnaire (3) et comprenant une extrémité (4) dans la direction d'envergure,
- une portion (6) d'un fuselage d'un aéronef,
- un système d'actionnement configuré pour actionner la partie mobile (1) par rapport à la partie stationnaire (3),
le système d'actionnement comprenant un système de coulissement joint à :
- l'extrémité (4) de la partie mobile (1), et
- joint à une structure stationnaire de l'aéronef, ladite structure stationnaire étant :
• située de façon adjacente, dans la direction d'envergure, à l'extrémité (4) de la partie mobile (1), et
• reliée à la partie stationnaire (3) de la surface portante, de telle façon que le système de coulissement permet à la partie mobile (1) de coulisser par rapport à la structure stationnaire, la structure stationnaire étant la portion (6) du fuselage de l'aéronef et l'extrémité (4) de la partie mobile (1) étant située à une emplanture de la surface portante d'aéronef (2) dans la direction d'envergure,
**caractérisée par** un actionneur (11) situé dans la portion (6) du fuselage et en association avec la partie mobile (1), l'actionneur (11) étant configuré pour transmettre une force à la partie mobile (1) pour son mouvement entre au moins une première position et une seconde position.

2. Surface portante d'aéronef (2) selon la revendication 1, dans laquelle le système de coulissement comprend un chemin de guidage (7) et un élément complémentaire (5) configurés pour coulisser l'un par rapport à l'autre.

3. Surface portante d'aéronef (2) selon la revendication 2, dans laquelle :
- le chemin de guidage (7) est situé dans la structure stationnaire et l'élément complémentaire (5) est situé dans l'extrémité (4) de la partie mobile (1), ou
- le chemin de guidage (7) est situé dans l'extrémité (4) de la partie mobile (1) et l'élément complémentaire (5) est situé dans la structure stationnaire.

4. Surface portante d'aéronef (2) selon une quelconque revendication 2 ou 3, dans laquelle la structure stationnaire comprend une fente (9) logeant le chemin de guidage (7) et l'extrémité (4) de la partie mobile (1) comprend l'élément complémentaire (5) de manière telle que l'élément complémentaire (5) est configuré pour s'ajuster dans la fente (9) pour suivre le chemin de guidage (7).

5. Surface portante d'aéronef (2) selon une quelconque revendication précédente 2 à 4, dans laquelle la structure stationnaire comprend au moins un premier et un second élément complémentaire (5) et l'extrémité (4) de la partie mobile (1) constitue le chemin de guidage (7) de manière telle que l'extrémité (4) de la partie mobile (1) est configurée pour être située entre les premier et second éléments complémentaires (5) de telle façon que l'extrémité (4) est adaptée pour entrer en mouvement relativement aux premier et second éléments complémentaires (5).

6. Surface portante d'aéronef (2) selon une quelconque revendication précédente 2 à 5, dans laquelle l'élément complémentaire (5) comprend un élément roulant (8) adapté pour rouler dans le chemin de guidage (7).

7. Surface portante d'aéronef (2) selon la revendication 1, dans laquelle l'actionneur (11) est un actionneur linéaire ayant un axe longitudinal, ledit axe longitudinal étant approximativement tangentiel à une courbe décrite par le chemin de guidage (7).

8. Surface portante d'aéronef (2) selon une quelconque revendication précédente, dans laquelle la partie mobile (1) comprend une seconde extrémité dans la direction d'envergure et le système de coulissement comprend un second système de coulissement joint à la seconde extrémité de la partie mobile et configuré pour être joint à une autre structure stationnaire de l'aéronef.

9. Surface portante d'aéronef (2) selon la revendication 8, dans laquelle la seconde extrémité de la partie mobile (1) est située à un bout de la surface portante d'aéronef (2) dans la direction d'envergure et l'autre structure stationnaire est un carénage adjacent au bout de la surface portante (2).

10. Surface portante d'aéronef (2) selon la revendication 8, dans laquelle la seconde extrémité de la partie mobile (1) est située à une position intermédiaire le long de l'envergure de la surface portante (2) et l'autre structure stationnaire est un carénage adjacent à ladite position intermédiaire.

11. Aéronef, comprenant une surface portante (2) selon une quelconque revendication précédente.
